# NEUE EUROPÄISCHE PATENTSCHRIFT

(11) **EP 0 405 615 B2**
(45) Veröffentlichungstag und Bekanntmachung des Hinweises auf die Entscheidung über den Einspruch: **23.04.2003**
(45) Hinweis auf die Patenterteilung: 05.04.1995
(21) Anmeldenummer: 90114011.1
(22) Anmeldetag: 23.01.1990
(51) Int. Cl.: C09K 3/30

(54) **Verwendung von C3- bis C5-Polyfluoralkanen als Treibgase**
Utilization of C3-C5 polyfluoralcanes as gas-propellants
Utilisation de polyfluoralcanes en C3-C5 comme gaz propulseurs

(30) Priorität: 04.02.1989 DE 3903336
(43) Veröffentlichungstag der Anmeldung: 02.01.1991
(62) Teilanmeldung aus: 90101260.9
(73) Patentinhaber: BAYER AG, 51368 Leverkusen (DE)
(72) Erfinder: Sommerfeld, Claus-Dieter, Dr., D-5063 Overath 2 (DE); Lamberts, Wilhelm, Dr., D-5000 Köln 80 (DE); Bielefeldt, Dietmar, Dr., D-4030 Ratingen 8 (DE); Marhold, Albrecht, Dr., D-5090 Leverkusen 1 (DE); Negele, Michael, Dr., D-5000 Köln 80 (DE)

(56) Entgegenhaltungen:
- EP-A- 0 134 666
- EP-A- 0 242 191
- WO-A-90/08753
- BE-A- 850 971
- DE-A- 1 542 076
- US-A- 3 369 913
- US-A- 3 725 317
- US-A- 3 874 965
- US-A- 4 101 467
- US-A- 4 268 614
- Kirk-Othmer, Encyclopedia of Chemical Technology, 3rd Edition, 1980, vol. 10, p. 866

## Beschreibung

Die vorliegende Erfindung betrifft die Verwendung von mindestens zwei Fluoratomen enthaltenden C₃bis C₅-Polyfluoralkanen als Treibgase bei der Herstellung von Kunststoff-Schaumstoffen.

Es ist bekannt, als Treibgase für die erwähnten Zwecke Fluorchlorkohlenwasserstoffe zu verwenden, beispielsweise Trichlorfluormethan, Dichlordifluormethan und Trichlorfluorethan. Nach neueren Untersuchungen ist der Chlorgehalt konventioneller Treibgase schädlich für die Ozonschicht der Erdatmosphäre (siehe J.F.D. Mills, Cell. Polym. 5, 343 (1987) und F.S. Rowland et al., Nature 239, 8 (1974)), weshalb Mengenbegrenzungen für die Herstellung von Fluorchlorkohlenwasserstoffen festgelegt worden sind. Es besteht deshalb ein Bedürfnis nach chlorfreien Treibgasen.

Aus US-A 3 369 913 ist ein selbstaufschäumendes Nahrungsmittel-Gemisch bekannt, das unter Druck in einem aerosol-abgebenden Behälter aufbewahrt wird, wobei die Mischung im wesentlichen aus einem aerosol-verabreichbaren Nahrungsmittel und 1,1,1,2,2-Pentafluorpropan besteht. Ein Beispiel für ein solches Lebensmittel ist Schlagsahne.

Aus der DE-A 1 542 076 ist eine Treibmittelmischung für Aerosole bekannt, die mindestens zwei verschiedene niedrigmolekulare halogenierte Kohlenwasserstoffe enthält, die unterschiedliche physikalische Parameter aufweisen.

Aus der EP-A 134 666 ist ein Verfahren zur Herstellung von elektrisch isolierenden Schäumen bekannt, die einen geringen Schwund bei Mikrowellen-Frequenzen haben und mit wasserstofffreien Fluor-Kohlenstoff-Verbindungen aufgeschäumt werden.

Aus allen diesen Schriften können keine Hinweise auf die Wärme-Isoliereigenschaften der erfindungsgemäß einzusetzenden Produkte hergeleitet werden.

Es wurde nun gefunden, daß sich Polyfluoralkane der Formel

CX₃ - CY₂ - R (I)

die 3 bis 7, insbesondere 4 bis 6 Fluoratome enthalten, und
bei denen X₃, Y₂ und R in einer der in der Tabelle 1 angegebenen Kombinationen vorliegen.

**Tabelle 1**

| X₃ | Y₂ | R |
|---|---|---|
| F₃ | H₂ | CH₂F |
| F₃ | HF | CH₂F |
| F₃ | H₂ | CHF₂ |
| HF₂ | F₂ | CH₂F |
| F₃ | HF | CH₃ |
| F₃ | F₂ | CF₂-CH₃ |
| F₃ | HF | CF₂-CH₃ |
| F₃ | H₂ | CF₂-CFH₂ |
| F₃ | H₂ | CH₂-CH₃ |
| H₃ | F₂ | CF₂-CH₃ |
| F₃ | H₂ | CF₂-CH₃ |
| F₃ | HCF₃ | CH₃ |
| F₃ | H₂ | CH₂-CH₂-CH₃ |
| F₃ | H₂ | -CH(CH₃)-CH₃ |
| F₃ | H₂ | CF₃ |

mit Vorteil als alleinige Treibgase bei der Herstellung von Schaumstoffen auf der Basis von Polystyrolen, Polyvinylchloriden und Phenol-Formaldehyd-Kondensaten verwenden lassen.

Die Herstellung erfindungsgemäß zu verwendender Polyfluoralkane ist bekannt (siehe beispielsweise Zh. Org. Khim. 1980, 1401-1408 und 1982, 946 und 1168; Zh. Org. Khim. 1988, 1558; J. Chem. Soc. Perk. 1, 1980, 2258; J. Chem. Soc. Perk. Trans. 2, 1983, 1713; J. Chem. Soc. C 1969, 1739; Chem. Soc. 1949, 2860; Zh. Anal. Khim. 1981 36 (6), 1125; J. Fluorine Chem. 1979, 325; Izv. Akad. Nauk. SSSR, Ser. Khim. 1980, 2117 (russ.); Rosz. Chem. 1974 (48), 1697 und J.A.C.S. 67, 1195 (1945), 72, 3577 (1950) und 76, 2343 (1954)).

Die erfindungsgemäß zu verwendenden Treibgase eignen sich besonders für die Herstellung von Kunststoff-Schaumstoffen, wobei Einzelverbindungen oder Mischungen von Verbindungen verwendet werden können.

Die Herstellung von Kunststoff-Schaumstoffen unter Verwendung von Treibgasen ist allgemein bekannt. Bei der Herstellung von geschlossenzelligen Schaumstoffen können die Treibgase auch als wärmedämmende Zellgase wirksam werden. Dies ist auch bei den erfindungsgemäß zu verwendenden Treibgasen der Fall.

Die nach der Erfindung erhältlichen Produkte finden z.B. als Dämmplatten für die Dachisolierung Anwendung.

Erfindungsgemäß zu verwendende Treibgase können bei der Schaumstoffherstellung beispielsweise in Mengen von 1 bis 30 Gew.-%, vorzugsweise 2 bis 10 Gew.-% eingesetzt werden, jeweils bezogen auf den Schaumstoff.

Schaumstoffe, die mit erfindungsgemäß zu verwendenden Treibgasen hergestellt wurden, zeichnen sich dadurch aus, daß bei ihnen im Vergleich zu konventionellen Schaumstoffen bei ähnlichen oder praktisch gleichen Zellstrukturen bei Herstellung, Gebrauch und Entsorgung entsprechend dem Anteil erfindungsgemäßer Treibgase die Ozonschicht der Erdatmosphäre nicht mehr negativ beeinflußt wird.

Eine weitere Verwendungsmöglichkeit der erfindungsgemäßen Polyfluoralkane der Formel (I) ist deren Einsatz als Entfettungs- und/oder Reinigungsmittel in der Elektroindustrie. Auch hier können Einzelverbindungen, Mischungen von Verbindungen und Mischungen von erfindungsgemäßen Verbindungen der Formel (I) mit konventionellen Entfettungs- und Reinigungsmitteln verwendet werden.

## Patentansprüche

1. Verwendung von Polyfluoralkanen der Formel
CX₃-CY₂-R (I)
die 3 bis 7 Fluoratome enthalten, wobei X₃, Y₂ und R in einer der folgenden Kombinationen vorliegen:
| X₃ | Y₂ | R |
|---|---|---|
| F₃ | H₂ | CH₂F |
| F₃ | HF | CH₂F |
| F₃ | H₂ | CHF₂ |
| HF₂ | F₂ | CH₂F |
| F₃ | HF | CH₃ |
| F₃ | F₂ | CF₂-CH₃ |
| F₃ | HF | CF₂-CH₃ |
| F₃ | H₂ | CF₂-CFH₂ |
| F₃ | H₂ | CH₂-CH₃ |
| H₃ | F₂ | CF₂-CH₃ |
| F₃ | H₂ | CF₂-CH₃ |
| F₃ | HCF₃ | CH3 |
| F₃ | H₂ | CH₂-CH₂-CH₃ |
| F₃ | H₂ | -CH(CH₃)-CH₃ |
| F₃ | H₂ | CF₃ |
als alleinige Treibgase für geschlosserizellige Kunststoff-Schaumstoffe auf Basis von Polystyrolen, Polyvinylchloriden oder Phenol-Formaldehyd-Kondensaten.

2. Verwendung nach Anspruch 1, **dadurch gekennzeichnet, dass** Einzelverbindungen des Anspruchs 1, oder Mischungen von Verbindungen des Anspruchs 1 verwendet werden.

3. Verwendung der in Anspruch 1 angegebenen Polyfluoralkane als Entfettungsund/oder Reinigungsmittel in der Elektroindustrie.

## Claims

1. Use of polyfluoroalkanes of the formula
CX₃-CY₂-R (I)
which contain 3 to 7 fluorine atoms, wherein X₃, Y₂ and R are present in one of the following combinations:
| X₃ | Y₂ | R |
|---|---|---|
| F₃ | H₂ | CH₂F |
| F₃ | HF | CH₂F |
| F₃ | H₂ | CHF₂ |
| HF₂ | F₂ | CH₂F |
| F₃ | HF | CH₃ |
| F₃ | F₂ | CF₂-CH₃ |
| F₃ | HF | CF₂-CH₃ |
| F₃ | H₂ | CF₂-CFH₂ |
| F₃ | H₂ | CH₂-CH₃ |
| H₃ | F₂ | CF₂-CH₃ |
| F₃ | H₂ | CF₂-CH₃ |
| F₃ | HCF₃ | CH₃ |
| F₃ | H₂ | CH₂-CH₂-CH₃ |
| F₃ | H₂ | -CH(CH₃)-CH₃ |
| F₃ | H₂ | CF₃ |
as the sole blowing gases for closed cell plastic foams based on polystyrenes, polyvinyl chlorides or phenol-formaldehyde condensation products.

2. Use according to claim 1, **characterised in that** individual compounds of claim 1 or mixtures of compounds of claim 1 are used.

3. Use of the polyfluoroalkanes stated in claim 1 as degreasing and/or cleaning agents in the electrical. industry.

## Revendications

1. Utilisation de polyfluoroalcanes de formule
CX₃ - CY₂ - R (I)
qui contiennent 3 à 7 atomes de fluor, où X₃, Y₂ et R sont présents dans l'une des combinaisons suivantes :
| X₃ | Y₂ | R |
|---|---|---|
| F₃ | H₂ | CH₂F |
| F₃ | HF | CH₂F |
| F₃ | H₂ | CHF₂ |
| HF₂ | F₂ | CH₂F |
| F₃ | HF | CH₃ |
| F₃ | F₂ | CF₂-CH₃ |
| F₃ | HF | CF₂-CH₃ |
| F₃ | H₂ | CF₂-CFH₂ |
| F₃ | H₂ | CH₂-CH₃ |
| H₃ | F₂ | CF₂-CH₃ |
| F₃ | H₂ | CF₂-CH₃ |
| F₃ | HCF₃ | CH₃ |
| F₃ | H₂ | CH₂-CH₂-CH₃ |
| F₃ | H₂ | -CH(CH₃)-CH₃ |
| F₃ | H₂ | CF₃ |
en tant que seuls gaz porogènes pour des mousses de résines synthétiques à cellules fermées, à base de polystyrènes, de poly(chlorures de vinyle) ou de condensats phénol/formaldéhyde.

2. Utilisation selon la revendication 1, **caractérisée en ce que** l'on utilise des composés individuels de la revendication 1 ou des mélanges de composés de la revendication 1.

3. Utilisation des polyfluoroalcanes de la revendication 1 en tant que produits dégraissants et/ou nettoyants dans l'industrie électrique.
